Europäisches Patentamt

European Patent Office

Office européen des brevets

(11) Publication number: **0 094 706**
A2

# (12) EUROPEAN PATENT APPLICATION

(21) Application number: 83200629.0

(22) Date of filing: 03.05.83

(51) Int. Cl.³: **G 01 N 21/35**

(30) Priority: 14.05.82 GB 8214151

(43) Date of publication of application:
23.11.83 Bulletin 83/47

(84) Designated Contracting States:
AT BE CH DE FR GB IT LI LU NL SE

(71) Applicant: COMBUSTION DEVELOPMENTS LIMITED
Unit 1C Station Yard
Bakewell Derbyshire(GB)

(72) Inventor: Coe, Charles David
21 Hall Dale View Darley Dale
Matlock Derbyshire(GB)

(74) Representative: Houghton, David et al,
Hulse & Co. Cavendish Buildings West Street
Sheffield, S1 1ZZ(GB)

(54) Gas analyser.

(57) The invention relates to gas analysers e.g. for analysing the carbon monoxide content of flue gas. It is known to test e.g. for carbon monoxide content, by directing infra-red radiation through a gas in a wavelength absorbed by carbon monoxide, and to use detectors for infra-red radiation, the level of radiation received by the detectors being utilised to evaluate the carbon monoxide content of the gas. The object of the invention is to provide gas analysing equipment which avoids the problems of taking gas samples from a flue and avoids the problems known in in situ equipment employing a beam splitter and two detectors where the detectors must be substantially identical in character. The objectives of the invention are met by a gas analyser characterised in that two detectors (8, 9) are provided on to which infra-red radiation is to be focussed there being a beam splitter (6) sited between a collecting lens (4), to focus radiation on the detectors, and the detectors, either a gas cell (7) said gas cell containing a sample of gas being analysed, or an equivalent means, sited between the beam splitter and the detector (8), a pass filter (5) sited between the radiation source and the detectors, to transmit radiation in a waveband absorbed by the gas under analysis, and there being means (11 or 12) to eliminate the part of the said radiation specifically absorbed by the said gas in that waveband adapted to be positioned periodically in the path between the radiation source and the detectors in addition to or in place of the band pass filter (5).

Croydon Printing Company Ltd.

GAS ANALYSER

This invention relates to gas analysers, and is particularly, though not necessarily exclusively, concerned with the analysis of the carbon monoxide content of flue gas.

The ability to control the air/fuel ratio of a combustion system has long been known, and there are devices known hitherto for detecting the carbon monoxide content of a flue gas and utilising the measured value either to signal a required change in the air/fuel ratio or be used to effect that change automatically. As an alternative to taking repeated samples of flue gas, there are, as is described in U.S. Patent 2,534,657, in-situ systems by which the flue gas can be constantly monitored. Thus, U.S. Patent Number 2,534,657 describes a technique for quantitatively monitoring a gas using the principle of infra-red absorption. In this technique infra-red radiation from a suitable source is directed through the gas to be analysed on to a suitably responsive detector, and a known sample of the gas, having the same basic absorption characteristics as the gas under observation, is alternately placed into and removed from the optical path of the infra-red radiation at a desired frequency. The difference in detector

outputs, with and without the known gas sample in the optical path, can be shown to be dependent upon the concentration of the gas under analysis, and the instrument can be calibrated accordingly.

The main disadvantage of this technique has been the practical one of reliability associated with the use of mechanical components for moving the known gas sample in and out of the optical path. Both rotational and reciprocating techniques have been used in the past but the reliability of the analysers has been limited by the high failure rate of continuously operating mechanical components.

One method of overcoming this problem is to use a beam splitter to produce two optical paths after the radiation has passed through the gas to be analysed. One beam then passes through the further known sample where it is measured by a detector, the other beam being measured directly by a second detector. The difference in detector outputs is then again related to the concentration of the gas in the sample to be analysed. Whilst the measurement is made without moving parts, the problem for such an instrument is its extreme vulnerability to detector drift. Since two detectors are used instead of one any drift in either of them will produce errors in measurement of gas concentration, with the adverse effect this has on attempting to achieve an optimum air/fuel ratio.

The object of the invention is to provide a means of gas analysis utilising a beam splitter, that allows simple and yet rapid and effective checking for any detector drift.

According to the present invention, a gas analyser comprises a source of infra-red radiation adapted to be sited to one side of a gas passageway, a collecting lens adapted to be sited at the opposite side of the gas passageway, two detectors on to which infra-red radiation is to be focused, a beam splitter sited between the lens and the detectors and either a gas cell, said gas cell containing a sample of gas being analysed, or an equivalent means sited between the beam splitter and the first detector, and there being adapted to be positioned in the path between the radiation source and each detector a band-pass filter to transmit radiation in a wave band absorbed by the gas under analysis together with means to eliminate the part of the said radiation specifically absorbed by the said gas in that wave band adapted to be positioned periodically in the path between the radiation source and the detectors in addition to or in place of the band-pass filter.

The means to eliminate radiation in a wave band absorbed by the gas under analysis may be a second band-pass filter. Therefore according to a first embodiment of the invention, a gas analyser comprises a source of infra-red radiation adapted to be sited to one side of a gas passageway, a collecting lens adapted to be sited at the opposite side of the gas passageway, two detectors on to which infra-red radiation is to be focussed, a beam splitter sited between the lens and the detectors, and a gas cell between the beam splitter and one detector, said gas cell containing a sample of gas being analysed or an equivalent filter means, there being selectively provided in the path between the radiation source and the beam splitter two band-pass filters, one to transmit radiation in a waveband absorbed by the gas under analysis, and the other to transmit radiation in a second waveband not absorbed by the gas under analysis. The radiation from the source may if desired be chopped to produce radiation, the magnitude of which varies with time.

Preferably, however, the means to eliminate radiation in a wave band absorbed by the gas under analysis may be a second gas cell containing a sample of gas being analysed. Therefore according to a second embodiment of the invention a gas analyser comprises a source of infra-red radiation adapted to be sited to one side of a gas passageway, a collecting lens adapted to be sited at the opposite side of the gas passageway, two detectors on to which infra-red radiation is to be focussed, a beam splitter sited between the lens and the detectors, and a gas cell between the beam splitter and one detector, said gas cell containing a sample of gas being analysed, there being provided in the path between the radiation source and the or each detector a band-pass filter to transmit radiation in a wave band absorbed by the gas under analysis, and there being a second gas cell containing a sample of the gas being analysed adapted to be brought into the path between the radiation source and the detectors. Thus, the second gas cell may be positioned between the source and the collecting lens. Preferably, a second collecting lens is provided to the same side of the gas passageway as the source, to focus radiation on to the collecting lens to the opposite side of the gas passageway.

The radiation from the source may if desired be chopped to produce radiation, the magnitude of which varies with time.

Thus, in operation, and after initially calibrating the two detectors, the gas in the passageway is constantly monitored with the band-pass filter transmitting radiation in a wavelength absorbed by the gas under analysis, the outputs from the two detectors being compared, and the difference utilised to compute in relatively known manner the concentration of the gas being analysed in the gas flow in the passageway. Periodically, the second band-pass filter is introduced in place of the first filter, or the second gas cell introduced when both detectors are irradiated with radiation at wavelengths not significantly further absorbed by the gas under analysis and when the two detectors see the source of radiation affected to the same degree. Any difference in detector output then immediately signifies that there has been detector drift and when immediate corrective action can be taken.

The invention therefore provides a gas analyser that avoids, in simple manner, the problems of repeated introduction into a radiation path one or more reference cells by utilising a two detector system, and allows the rapid monitoring of the degree of calibration between the two detectors.

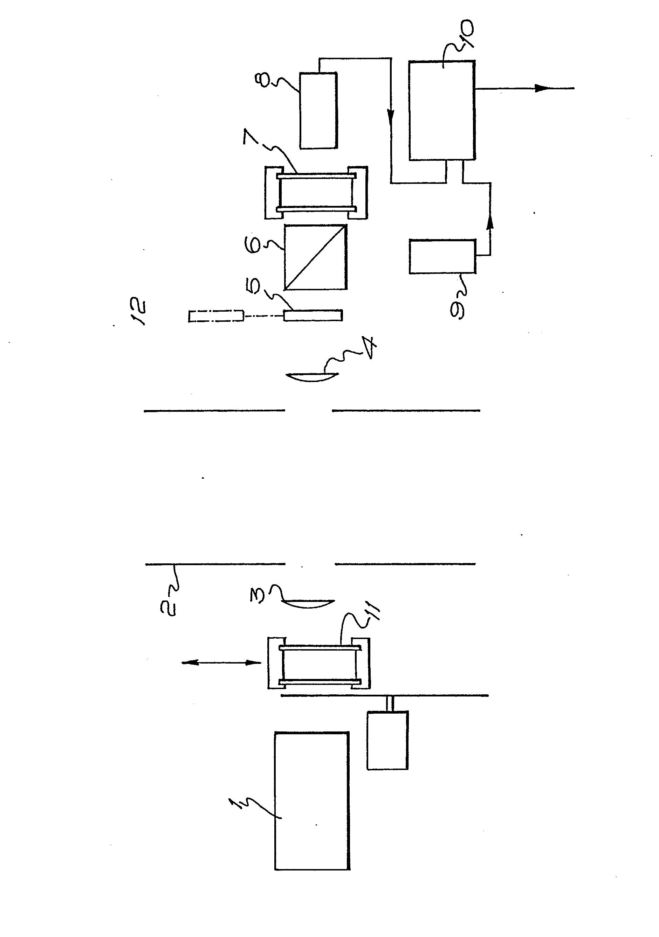

One embodiment of the invention is illustrated with reference to the accompanying drawing which is a schematic representation of a gas analyser according to the invention.

In the drawing, a radiation source, e.g., a hot plate or glow bar 1 is provided to one side of a passageway 2 for flue gas containing a quantity of carbon monoxide. To the same side of the gas passageway, a collecting lens 3 is provided, to focus radiation on to a collecting lens 4 to the opposite side of the gas passageway, and beyond which is a band-pass filter 5, followed by a beam splitter 6 allowing e.g., 50% of the radiation to pass straight through to a reference cell 7 containing a sample of carbon monoxide behind which is a detector 8, and diverting, e.g., 50% through 90° to reach a detector 9. The outputs from the detectors 8 and 9 are fed to a signal processor 10, either to compute the concentration of carbon monoxide in the gas in the passageway or to compute the degree of calibration between the two detectors.

Thus, to allow the computation of the concentration of carbon monoxide, the band-pass filter 5 is provided in the radiation path, which filter transmits radiation in the wavelength absorbed by carbon monoxide. The different outputs from the detectors are then used in known manner to compute the carbon monoxide concentration. Periodically, a second gas cell 11 is introduced between the radiation source and the filter 5, the second gas cell containing a sample of carbon monoxide. When the second gas cell is in place, substantially all radiation in the wave length absorbed by carbon monoxide is absorbed and when the outputs from the detectors 8, 9 are unaffected by the minimal (comparatively) further absorption of radiation by any carbon monoxide content of the gas passing through the passageway 2. In this condition, any difference in output from the detectors 8, 9 signifies that there has been detector drift and again immediate corrective action can be taken.

As an alternative, a second band pass filter indicated at 12 can be used in place of the gas cell 11. Thus, the second band pass filter can, periodically, replace the band pass filter 5, and with the filter 12 allowing the transmission of radiation in a waveband not absorbed by the gas under analysis, the same effect is achieved, i.e.

the two detectors are unaffected by any radiation absorption in the gas passageway, and any difference in output signifies detector drift.

CLAIMS ·

1. A gas analyser comprising a source of infra-red radiation adapted to be sited to one side of a gas passageway, detector means adapted to be sited to the opposite side of the gas passageway and a gas reference cell containing a sample of the gas to be analysed, adapted to be positioned between the source of radiation and the detector means, characterised in that two detectors (8, 9) are provided on to which infra-red radiation is to be focussed there being a beam splitter (6) sited between a collecting lens (4), to focus radiation on the detectors, and the detectors, either a gas cell (7) said gas cell containing a sample of gas being analysed, or an equivalent means, sited between the beam splitter and the detector (8), a pass filter (5) sited between the radiation source and the detectors, to transmit radiation in a waveband absorbed by the gas under analysis, and there being means (11 or 12) to eliminate the part of the said radiation specifically absorbed by the said gas in that waveband adapted to be positioned periodically in the path between the radiation source and the detectors in addition to or in place of the band pass filter (5).

2. A gas analyser as in Claim 1, characterised in that the means to eliminate radiation in the waveband absorbed by the gas under analysis is a second band pass filter (12).

3. A gas analyser as in Claim 1, characterised in that the means to eliminate radiation in a waveband absorbed by the gas under analysis is a second gas cell (11) containing a sample of the gas being analysed.

4. A gas analyser as in Claim 3, characterised in that the second gas cell (11) is positioned between the source and the collecting lens.

5. A gas analyser as in any of Claims 1 to 4, characterised in that a second collecting lens (3) is provided to the same side of the gas passageway as the source to focus radiation on the collecting lens (4).

6. A gas analyser as in any of Claims 1 to 5, wherein chopping means for radiation from the source are provided.

0094706